# EUROPEAN PATENT APPLICATION

(11) **EP 1 773 022 A1**
(43) Date of publication of application: **11.04.2007**
(21) Application number: 06014715.4
(22) Date of filing: 14.07.2006
(51) Int. Cl.: H04L 29/08

(54) **Method and system for data synchronization**

(30) Priority: 07.10.2005 KR 20050094361
(71) Applicant: Samsung Electronics Co., Ltd., Yeongtong-gu Suwon-si, Gyeonggi-do (KR)
(72) Inventor: Kim, June-Yeob, Suwon-si Gyeonggi-do (KR)
(74) Representative: Lang, Johannes

(57) **Abstract**

A method and a system for displaying and informing of a synchronization progress more precisely, while data synchronization is being performed between a mobile terminal and a server, are provided. A mobile terminal and a server are connected in order to perform data synchronization. An initialization task for synchronization is performed, while recognizing a total number of data to be synchronized through exchange of initial information for synchronization, which includes a number of data to be synchronized according to each item, between the mobile terminal and the server. Data synchronization is performed while transmitting/receiving data to be synchronized between the mobile terminal and the server, when the initialization task for synchronization is completed. Progress of synchronization is displayed by indicating a number of data having been synchronized based on the total number of data to be synchronized, while the mobile terminal and the server are performing the data synchronization.

## Description

### BACKGROUND OF THE INVENTION

### Field of the Invention

The present invention relates to a method and system for displaying the process of synchronization. More particularly, the present invention relates to a method and system for more precisely displaying and informing of, the synchronization progress while data synchronization is being performed between a mobile terminal and a server.

### Description of the Related Art

In general, a mobile terminal has been regarded as an indispensable device which provides various functions in addition to a basic telephone communication function. The data synchronization (DS) function of the Synchronization Markup Language (SyncML) is used to efficiently manage Personal Information Management (PIM) data.

The Open Mobile Alliance, which is a consortium of companies relating to wireless communication and which makes standards for wireless communication technology, has made the SyncML DS which is a standard for synchronization based on the SyncML.

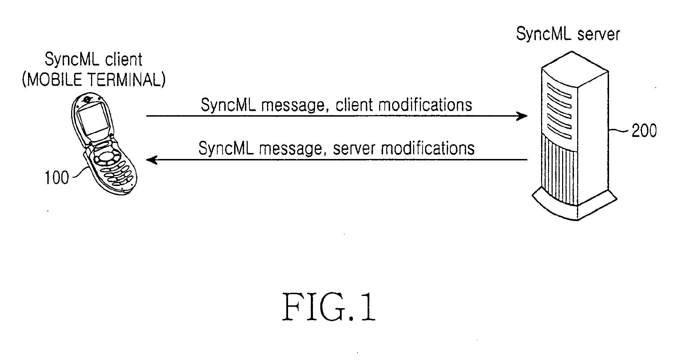

FIG. 1 is a view illustrating the procedure of transmitting/receiving data to be synchronized between a mobile terminal and a SyncML DS server. That is, FIG. 1 shows the operations of the mobile terminal and the server with respect to the SyncML DS. Generally, when a mobile terminal 100 transmits data required for synchronization to a server 200, the server 200 transmits data required for synchronization to the mobile terminal 100.

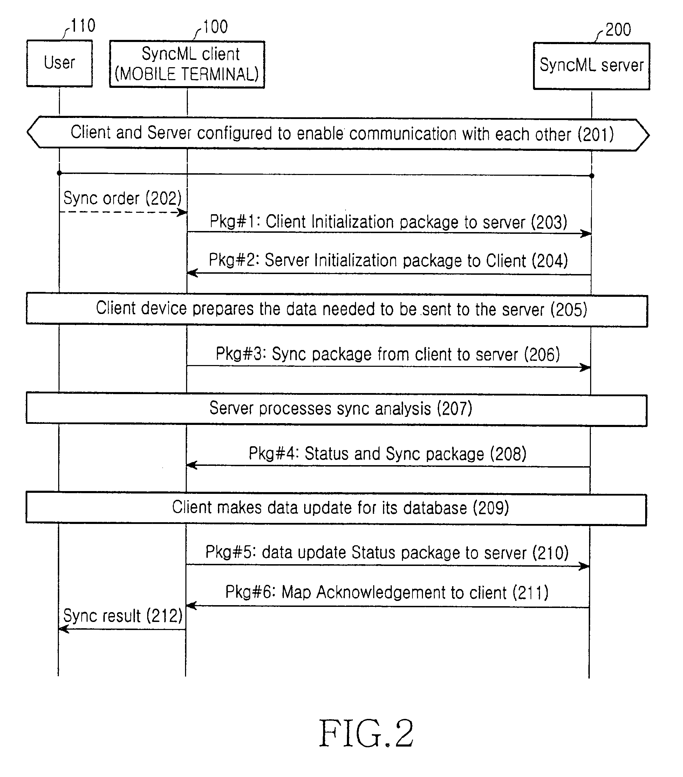

The procedure of transmitting/receiving data to be synchronized between the mobile terminal and the server, as shown in FIG. 1, will be described in more detail with reference to FIG. 2.

FIG. 2 is a view for explaining the synchronization procedure between a mobile terminal and a SyncML DS server.

In step 201, the mobile terminal 100 and the SyncML DS server 200 prepares a communication connection for synchronization therebetween. When the user 110 executes synchronization in step 202, the mobile terminal 100 transmits a first package including information required for synchronization (that is, information about the types of items to be synchronized and information about the mobile terminal) to the server 200 in step 203. When the server 200 receives the first package, the server 200 transmits a second package including information required for synchronization (that is, information about the types of items to be synchronized and information about the server) to the mobile terminal 100 in step 204. The mobile terminal 100 and the server 200 primarily exchange the information required for synchronization through the transmission of the first and second packages in steps 203 and 204, thereby performing the initial task for synchronization.

After performing the initial task for synchronization, the mobile terminal 100 prepares data to be synchronized in order to transmit the data to the server 200 (step 205), and proceeds to step 206. In step 206, the mobile terminal 100 transmits data required for synchronization through a third package to the server 200. When receiving the third package, the server 200 performs a synchronization task in step 207. When completing the synchronization task, the server 200 transmits information about the synchronization state of the server and data required for synchronization to the mobile terminal 100 through a fourth package (step 208).

When receiving the fourth package, the mobile terminal 100 performs a synchronization task in step 209. When completing the synchronization task in step 209, the mobile terminal 100 transmits a fifth package of information stating that the synchronization task is completed to the server 200 (step 210).

When receiving the fifth package, the server 200 transmits an acknowledgement message to the mobile terminal 100 through a sixth package in step 211. When receiving the sixth package, the mobile terminal 100 proceeds to step 212 of notifying the user 110 of the result of synchronization.

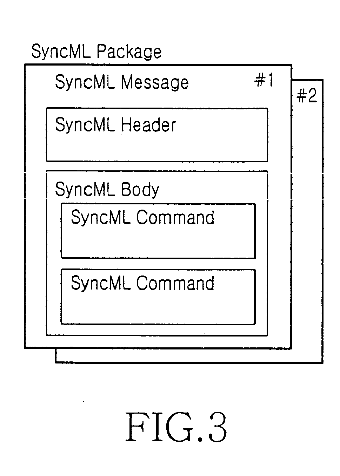

The packages transmitted/received between the mobile terminal 100 and the server 200 for the synchronization task in the procedure shown in FIG. 2 may be distinguished in a message unit as shown in FIG. 3. FIG. 3 is a view illustrating the configuration of the package.

The package represents one message in terms of logic. A message represents one of sub-packages, which are divided from one package due to limited physical resources, so a command of "<Fina1/>" is used in a message in order to determine if the message is the final message for a relevant package. The total process of exchanging all packages required for achieving the entire synchronization is called a "session".

The package is transmitted as one or more messages, and each message includes a SyncML header and a SyncML body. The SyncML header contains information about a counterpart device for synchronization, and the SyncML body contains a plurality of commands according to each package.

Each message of the third and fourth packages carrying data required for synchronization in FIG. 2 includes a command of "<NumberOfChanges>" in order to inform the number of relevant PIN data to be synchronized. The command of "<NumberOfChanges>" is defined in a command of "<Sync>", which is included in the SyncML body.

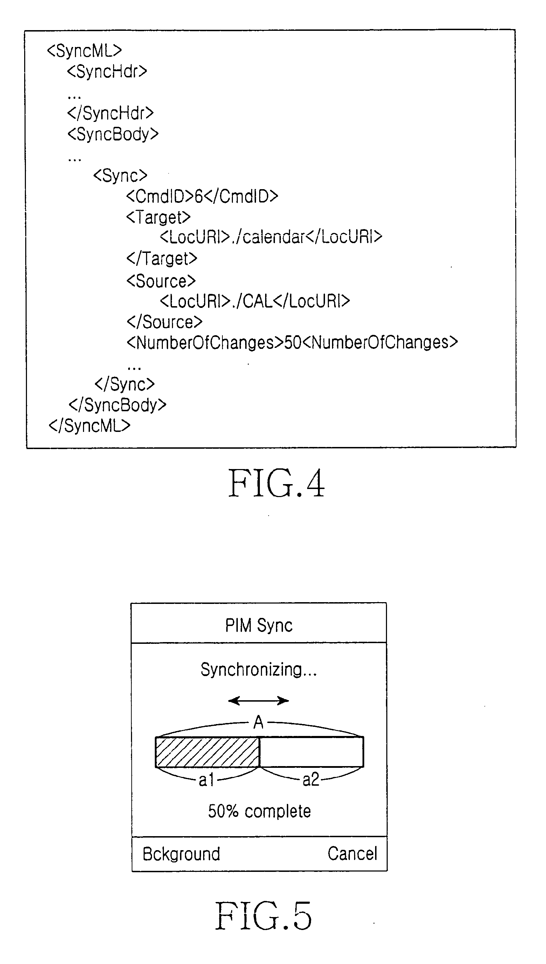

FIG. 4 is a view illustrating a coding of the third/fourth package, and shows an example of the command of "<NumberOfChanges>".

Referring to FIG. 4, it can be understood through the command of "<NumberOf-Changes>50<NumberOfChanges>" that the third package contains 50 pieces of data to be transmitted in this message.

Therefore, the mobile terminal 100 can know the number of data for items transmitted from the server 200 to the mobile terminal 100, as well as the number of data for items transmitted from the mobile terminal 100 to the server 200, by using the number of data expressed with the command of "<NumberOfChanges>". Accordingly, the mobile terminal 100 can show the user the progress of synchronization in a progress bar form employing a percentage (%) concept through a UI (user interface).

However, as described above, the <NumberOfChanges> information transmitted from the mobile terminal is included in a message of the third package, while the <NumberOfChanges> information transmitted from the server is included in a message of the fourth package. Therefore, it is impossible to know the total number of data required for synchronization in advance, so that each of the third and fourth packages is expressed as 50% when the progress of synchronization is expressed as a percentage. Accordingly, inexact information may be provided to the user.

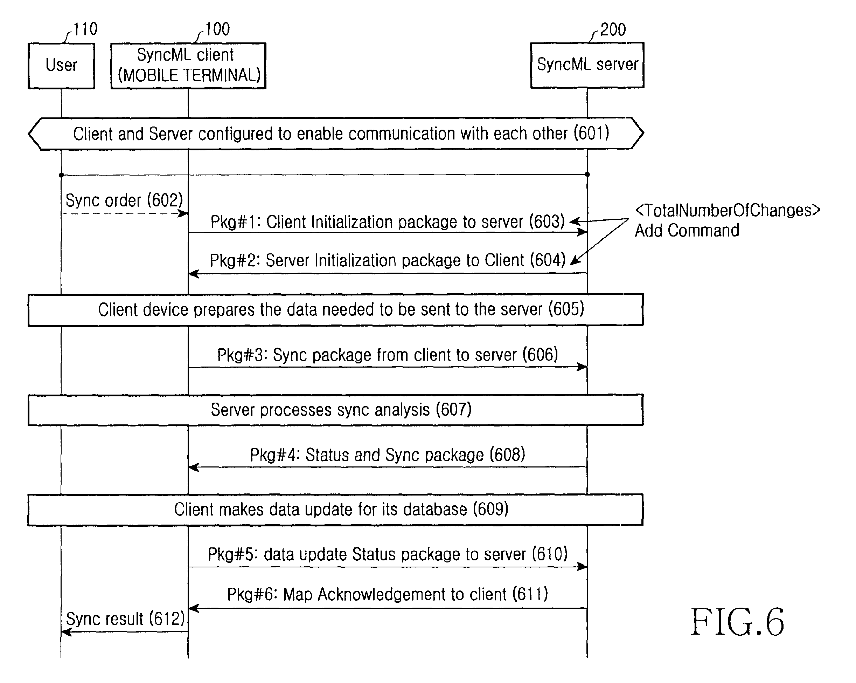

FIG. 5 is a view illustrating a progress bar for indicating the progress of synchronization during the synchronization process in the mobile terminal. Of the entire synchronization progress period "A" of 100%, 50% is allocated for the transmission period of the third package, and the remaining 50% is allocated for the transmission period of the fourth package.

For example, it is assumed that one piece of PIM data to be transmitted from the mobile terminal exists according to each item of Contacts, Calendar, and Tasks, nine pieces of PIM data to be transmitted from the server exist according to each item of Contacts, Calendar, and Tasks. In this case, when three pieces of data have been transmitted through the third package, 10% of the total 30 pieces of data has in fact progressed, but it is shown to the user that 50% of the entire data has been transmitted. That is, although only three pieces among the 30 pieces of data have been transmitted, the progress bar indicates that 50% of the entire data has been transmitted as shown in FIG. 5. As the difference between the numbers of data transmitted through the third and fourth packages becomes larger, the greater amount of error information regarding the progress of synchronization is provided to the user.

### SUMMARY OF THE INVENTION

Accordingly, exemplary embodiments of the present invention address at least the above-mentioned problems occurring in the prior art, and an object of the present invention is to provide a method and system for displaying and providing a more precise information on synchronization progress while data synchronization is being performed between a mobile terminal and a server.

To accomplish this and other exemplary objects, in accordance with an exemplary aspect of the present invention, there is provided a method and system for displaying a progress of synchronization, where a mobile terminal and a server are connected in order to perform data synchronization, and an initialization task for synchronization is performed, while recognizing a total number of data to be synchronized through exchange of initial information for synchronization, which includes a number of data to be synchronized according to each item, between the mobile terminal and the server. Data synchronization is performed while transmitting/receiving data to be synchronized between the mobile terminal and the server, when the initialization task for synchronization is completed. Progress of synchronization is displayed by indicating a number of data having been synchronized based on the total number of data to be synchronized, while the mobile terminal and the server are performing the data synchronization.

In accordance with another exemplary aspect of the present invention, there is provided a method and system for displaying a progress of synchronization, where a mobile terminal and a server are connected in order to perform data synchronization, a first package including a number of data to be synchronized according to each item is transmitted from the mobile terminal to the server, and a second package including a number of data to be synchronized according to each item is transmitted from the server to the mobile terminal, when the server receives the first package. Initialization task for synchronization is performed, while the mobile terminal and the server recognize a total number of data to be synchronized through transmission/reception of the first and second packages. Data synchronization is performed by the mobile terminal and the server in such a manner that the mobile terminal transmits a third package including data to be synchronized to the server, and the server transmits a fourth package including data to be synchronized to the mobile terminal, when the initialization task for synchronization is completed. Progress of synchronization is displayed by indicating a number of data having been synchronized based on the total number of data to be synchronized, while the mobile terminal and the server are performing the data synchronization through transmission/reception of the third and fourth packages.

### BRIEF DESCRIPTION OF THE DRAWINGS

The above and other exemplary objects, features and advantages of certain exemplary embodiments of the present invention will be more apparent from the following detailed description taken in conjunction with the accompanying drawings, in which like reference numerals will be understood to refer to like parts, components and structures, where like reference numerals will be understood to refer to like parts, components and structures, where:
FIG. 1 is a view illustrating the procedure of transmitting/receiving data to be synchronized between a mobile terminal and a server;
FIG. 2 is a view for explaining the synchronization procedure between a mobile terminal and a server;
FIG. 3 is a view illustrating the configuration of a package transmitted/received for the synchronization between the mobile terminal and the server in FIG. 2;
FIG. 4 is a view illustrating a coding of the third/fourth package explained in FIG. 2;
FIG. 5 is a view illustrating a progress bar for indicating the progress of synchronization during the synchronization process in FIG. 2;
FIG. 6 is a view for explaining the synchronization procedure between a mobile terminal and a server according to an exemplary embodiment of the present invention;
FIG. 7 is a view illustrating a coding of the first/second package explained in FIG. 6; and
FIG. 8 is a view illustrating a progress bar of indicating the progress of synchronization during the synchronization process in FIG. 6.

### DETAILED DESCRIPTION OF EXEMPLARY EMBODIMENTS

Hereinafter, exemplary embodiment of the present invention will be described with reference to the accompanying drawings. As noted above, the same elements are indicated with the same reference numerals throughout the drawings.

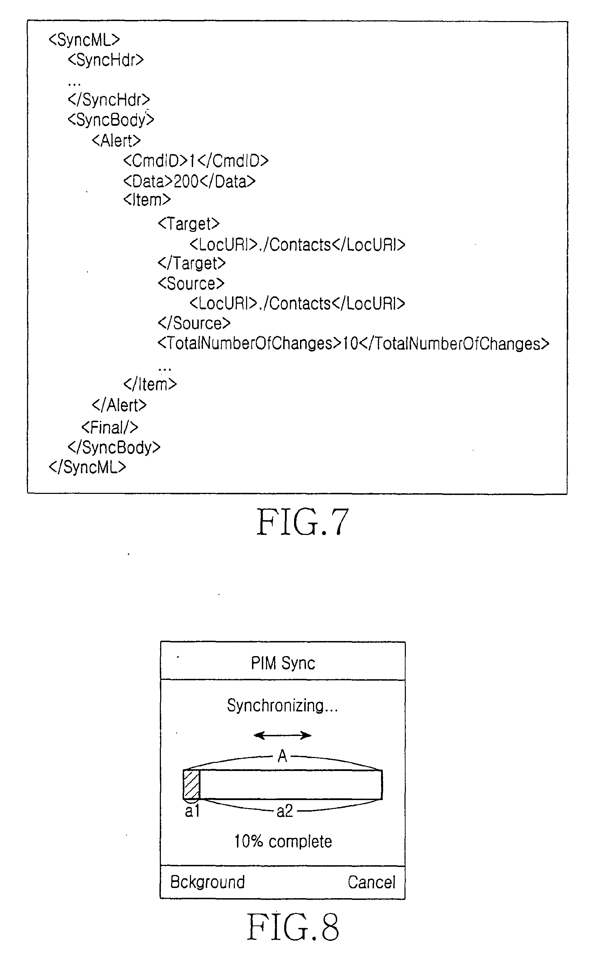

FIG. 6 is a view for explaining the synchronization procedure between a mobile terminal and a Synchronization Markup Language (SyncML) data synchronization (DS) server according to an exemplary embodiment of the present invention, FIG. 7 is a view illustrating a coding of the first/second package explained in FIG. 6, and FIG. 8 is a view illustrating a progress bar of indicating the progress of synchronization during the synchronization process of FIG. 6.

Referring to FIG. 6, first, a mobile terminal 100 and a server 200 prepares a communication connection for synchronization therebetween in step 601. When the user 110 executes synchronization in step 602, the mobile terminal 100 transmits a first package including information required for synchronization to the server 200 in step 603. The first package contains initial information required for synchronization, which includes the types of items to be synchronized, the number of data to be synchronized according to each item, and information about the mobile terminal.

When the server 200 receives the first package, the server 200 transmits a second package including information required for synchronization to the mobile terminal 100 in step 604. The second package contains initial information required for synchronization, which includes the types of items to be synchronized, the number of data to be synchronized according to each item, and information about the server.

When the information required for synchronization is primarily exchanged between the mobile terminal 100 and the server 200 through the transmission of the first and second packages in steps 603 and 604, the mobile terminal 100 and server 200 performs the initial task for synchronization while recognizing the total number of data to be synchronized.

FIG. 7 is a view illustrating a coding of the first/second package. The first/second package uses a command of "<Alert>" in order to transmit information required for synchronization to a receiving device. The command of "<Alert>" is used to distinguish items of Contacts, Calendar, Tasks, and so on from each other. In this case, the total number of data for each item to be transmitted to a receiving device is expressed by using a command of "<TotalNumberOfChanges>".

Therefore, the mobile terminal 100 can know the total number of data for each item to be actually synchronized before transmitting/receiving the data, by receiving the number of "<TotalNumberOfChanges>" transmitted through the second package from the server 200. Similarly, the server 200 can know the total number of data for each item to be actually synchronized before transmitting/receiving the data, by receiving the number of "<TotalNumberOfChanges>" transmitted through the first package from the mobile terminal 100.

After performing the initial task for synchronization, the mobile terminal 100 prepares data to be synchronized in order to transmit the data to the server 200 (step 605), and transmits a third package to the server 200 in step 606, in which the third package includes data of a relevant item to be synchronized and information about the number of data. The server 200, having received the third package, performs a synchronization task in step 607. When completing the synchronization task, the server 200 transmits a fourth package to the mobile terminal 100 in step 608, in which the fourth package includes the synchronization state of the server, data of a relevant item to be synchronized, and information about the number of the data.

When receiving the fourth package, the mobile terminal 100 performs a synchronization task in step 609. When completing the synchronization task in step 609, the mobile terminal 100 transmits a fifth package of information stating that the synchronization task is completed to the server 200 (step 610).

While the mobile terminal 100 and server 200 performs data synchronization through the transmission/reception of the third and fourth packages in steps 606 and 608, the mobile terminal 100 displays, using a progress bar, the number of data having synchronized through the reception of the fourth package, based on the total number of data to be synchronized, which has been recognized through the second package in step 604. Similarly, the server 200 may display, using a progress bar, the number of data having synchronized through the reception of the third package, based on the total number of data to be synchronized, which has been recognized through the first package in step 603.

For example, it is assumed that one piece of PIM data to be transmitted from the mobile terminal 100 exists according to each item of Contacts, Calendar, and Tasks, nine pieces of PIM data to be transmitted from the server exist according to each item of Contacts, Calendar, and Tasks. In this case, when three pieces of data have been transmitted through the third package, the progress bar indicates that the progression "a1" of 10% of the entire 30 pieces "A" of data, as shown in FIG. 8.

When receiving the fifth package, the server 200 transmits an acknowledgement message to the mobile terminal 100 through a sixth package in step 611. When receiving the sixth package, the mobile terminal 100 proceeds to step 612 of notifying the user 110 of the result of synchronization.

As described above, exemplary embodiments of the present invention provide a method and system for displaying progress state of synchronization more precisely, thereby notifying the user of a more precise progress state of synchronization while data synchronization is being performed.

While the present invention has been shown and described with reference to certain exemplary embodiments thereof, it will be understood by those skilled in the art that various changes in form and details may be made therein without departing from the spirit and scope of the invention as defined by the appended claims and the equivalents thereof.

## Claims

1. A method for displaying progress of synchronization, the method comprising:
connecting a mobile terminal and a server for performing synchronization;
performing an initialization task for the synchronization, while recognizing a total number of data to be synchronized through exchange of initial information for the synchronization, the initial information comprising a number of data to be synchronized according to each item, between the mobile terminal and the server;
performing the synchronization while transmitting or receiving data to be synchronized between the mobile terminal and the server, when the initialization task for synchronization is completed; and
displaying a progress of synchronization by indicating a number of data having been synchronized based on the total number of data to be synchronized, while the mobile terminal and the server are performing the data synchronization.

2. The method as claimed in claim 1, wherein the performing of the initialization task for the synchronization comprises:
transmitting first initial information for synchronization, the first initial information comprising a type of item to be synchronized, a number of data to be synchronized according to each item, and information about the mobile terminal, from the mobile terminal to the server;
transmitting second initial information for synchronization, the second initial information comprising a type of item to be synchronized, a number of data to be synchronized according to each item, and information about the server, from the server to the mobile terminal, when the first initial information for synchronization is received from the mobile terminal; and
performing the initialization task for synchronization, while the mobile terminal and the server recognize the total number of data to be synchronized through exchange of the first and second initial information for synchronization.

3. The method as claimed in claim 1, wherein an indication of the progress of synchronization comprises a percentage (%).

4. The method as claimed in claim 1, wherein the server comprises a SyncML (Synchronization Markup Language) DS (Data Synchronization) server.

5. A method for displaying a progress of synchronization, the method comprising:
connecting a mobile terminal and a server for performing synchronization;
transmitting a first package comprising a number of data to be synchronized according to each item from the mobile terminal to the server;
transmitting a second package comprising a number of data to be synchronized according to each item from the server to the mobile terminal, when the server receives the first package;
performing initialization task for synchronization, while the mobile terminal and the server recognize a total number of data to be synchronized through transmission or reception of the first and second packages;
performing the data synchronization by the mobile terminal and the server, wherein the mobile terminal transmits a third package including data to be synchronized to the server, and the server transmits a fourth package including data to be synchronized to the mobile terminal, when the initialization task for synchronization is completed; and
displaying a progress of synchronization by indicating a number of data having been synchronized based on the total number of data to be synchronized, while the mobile terminal and the server are performing the data synchronization through transmission or reception of the third and fourth packages.

6. The method as claimed in claim 5, wherein an indication of the progress of synchronization comprises a percentage (%).

7. The method as claimed in claim 5, wherein the server comprises a SyncML (Synchronization Markup Language) DS (Data Synchronization) server.

8. A system for displaying progress of synchronization, the system comprising:
a mobile terminal; and
a server connected to the mobile terminal for performing synchronization;
wherein an initialization task for the synchronization is performed, while recognizing a total number of data to be synchronized through exchange of initial information for the synchronization, the initial information comprising a number of data to be synchronized according to each item, between the mobile terminal and the server;
the synchronization is performed while transmitting or receiving data to be synchronized between the mobile terminal and the server, when the initialization task for synchronization is completed; and
a progress of synchronization is displayed by indicating a number of data having been synchronized based on the total number of data to be synchronized, while the mobile terminal and the server are performing the data synchronization.

9. The system as claimed in claim 8, wherein the initialization task for the synchronization comprises:
transmitting first initial information for synchronization, the first initial information comprising a type of item to be synchronized, a number of data to be synchronized according to each item, and information about the mobile terminal, from the mobile terminal to the server;
transmitting second initial information for synchronization, the second initial information comprising a type of item to be synchronized, a number of data to be synchronized according to each item, and information about the server, from the server to the mobile terminal, when the first initial information for synchronization is received from the mobile terminal; and
performing the initialization task for synchronization, while the mobile terminal and the server recognize the total number of data to be synchronized through exchange of the first and second initial information for synchronization.

10. The system as claimed in claim 8, wherein an indication of the progress of synchronization comprises a percentage (%).

11. The system as claimed in claim 8, wherein the server comprises a SyncML (Synchronization Markup Language) DS (Data Synchronization) server.

12. A system for displaying a progress of synchronization, the system comprising:
a mobile terminal; and
a server connected to the mobile terminal for performing synchronization;
wherein a first package comprising a number of data to be synchronized according to each item is transmitted from the mobile terminal to the server;
a second package comprising a number of data to be synchronized according to each item is transmitted from the server to the mobile terminal, when the server receives the first package;
an initialization task for synchronization is performed, while the mobile terminal and the server recognize a total number of data to be synchronized through transmission or reception of the first and second packages;
the data synchronization is performed by the mobile terminal and the server, wherein the mobile terminal transmits a third package including data to be synchronized to the server, and the server transmits a fourth package including data to be synchronized to the mobile terminal, when the initialization task for synchronization is completed; and
a progress of synchronization is displayed by indicating a number of data having been synchronized based on the total number of data to be synchronized, while the mobile terminal and the server are performing the data synchronization through transmission or reception of the third and fourth packages.

13. The system as claimed in claim 12, wherein an indication of the progress of synchronization comprises a percentage (%).

14. The system as claimed in claim 12, wherein the server comprises a SyncML (Synchronization Markup Language) DS (Data Synchronization) server.
